# EUROPÄISCHE PATENTSCHRIFT

(11) **EP 1 621 067 B1**
(45) Veröffentlichungstag und Bekanntmachung des Hinweises auf die Patenterteilung: **28.05.2008**
(21) Anmeldenummer: 05014723.0
(22) Anmeldetag: 07.07.2005
(51) Int. Cl.: A01D 78/12

(54) **Schwadkreisel für eine Heuwerbungsmaschine**
Rotary rake for a haymaking machine
Râteau rotatif pour une machine de fenaison

(30) Priorität: 28.07.2004 DE 102004036671
(43) Veröffentlichungstag der Anmeldung: 01.02.2006
(60) Teilanmeldung: 07005344.2
(73) Patentinhaber: CLAAS Saulgau GmbH, 88348 Bad Saulgau (DE)
(72) Erfinder: Frick, Clemens, 88356 Ostrach (DE); Geng, Manfred, 88348 Bad Saulgau (DE)

(56) Entgegenhaltungen:
- EP-A- 0 590 311
- EP-A- 0 846 410
- DE-A1- 19 746 216
- DE-U1- 8 624 527
- GB-A- 1 278 450
- GB-A- 1 325 484
- GB-A- 1 373 713
- US-A- 5 791 133

## Beschreibung

Die Erfindung betrifft einen Schwadkreisel für Kreiselschwader gemäß dem Oberbegriff des unabhängigen Anspruchs.

Kreiselschwader mit gesteuerten Zinkenarmen verfügen über mit Rechzinken bestückte Zinkenarme, die in bekannter Weise von Kurvenbahnen gesteuert werden. Aus Transport- oder Montagegründen werden die Zinkenarme zweiteilig ausgeführt, so dass diese getrennt voneinander transportiert werden können. Zur Herbeiführung ihrer Betriebsstellung werden beide Teile dann mittels einer Kupplungs- und Verriegelungseinrichtung miteinander gekoppelt.

Dazu werden die beiden Teile in einer Kupplungsverbindung nach dem Prinzip Welle und Kupplungsmuffe ineinander gesteckt. Dabei muss die Kupplungsverbindung infolge des Belastungszustandes funktional in der Lage sein Biegemomente, ein Drehmoment, Quer- und Längskräfte zu übertragen bzw. diesen Stand zu halten.

Die DE 42 32 768 A1 offenbart einen Kreiselschwader, bei dem die Tragarme der Rechzinken aus inneren, als Zinkentragarme bezeichneten Abschnitten und aus äußeren als Zinkenträger bezeichneten Abschnitten bestehen, wobei Zinkenträger und Zinkentragarme über eine Schiebesitzverbindung ineinander steckbar sind. Damit über diese Schiebesitzverbindung ein Drehmoment übertragen werden kann, weisen die Zinkenträger hohlkehlenförmige längsgerichtete Vertiefungen auf, die mit Schrägflächen der Zinkenarme zusammen wirken. Zur axialen Sicherung der Schiebesitzverbindung ist eine Querbohrung vorgesehen, durch die ein Sicherungsbolzen, eine Schraube oder ein Federstecker hindurch gesteckt wird. Infolge der dynamischen Belastung, welcher die Schiebesitzverbindung ausgesetzt ist, neigt die Kontaktfläche zwischen dem Sicherungsbolzen und den Elementen der Schiebesitzverbindung dazu, sich durch Verformung zu verändern, welches Stauchungen zu Folge hat. Dieses erschwert für den Fall der Demontage das Auseinanderziehen der beiden Abschnitte des Tragarms der Rechzinken bzw. auch umgekehrt das Ineinanderstecken bei der späteren Montage zur Wiederherstellung des Betriebszustands.

Aus der DE G86 24 527.9 ist ebenfalls eine Heuwerbungsmaschine, insbesondere ein Kreiselschwader mit abnehmbaren Zinkenträgern des Zinkenkreisels bekannt. Der abnehmbare Zinkenträger wird in seine Betriebsstellung gebracht, indem dieser in eine Führungsbuchse eingeführt wird, wobei die Führungsbuchse an ihrem äußeren Umfang im Bereich der Schiebesitzverbindung eine Mitnehmerlasche aufweist, die mit einer am Zinkenarm angebrachten Zuglasche Drehmoment übertragend in Wirkverbindung steht. Beide Teile, die Mitnehmerlasche und die Zuglasche sind mittels einer Arretierfeder gegeneinander gegen unbeabsichtigtes Lösen verriegelt. Diese Verriegelungsart vermeidet zwar die zuvor angesprochene Bohrung im Schiebesitzbereich, sie überträgt jedoch auch nicht das Drehmoment zur Abstützung und Betätigung der Rechzinken auf Ihrer Umlaufbahn um die Kreiselachse. Diese Funktion ist dem Zusammenwirken von Mitnehmer- und Zuglasche vorbehalten, und ebenfalls dazu zählt die Funktion als Widerlager zur Aufnahme der Zentrifugalkraft, welche die umlaufenden Zinkenträger mit deren Rechzinken verursachen. Wegen der Demontierbarkeit ist die gegenseitige Durchdringung von Mitnehmer- und Zuglasche mit einer Spielpassung versehen, welches dem problematischen spielvergrößernden Ausschlagen Vorschub leistet.

In der DE 197 46 216.2 ist ein analoger zweiteiliger Zinkenarm beschrieben. Er besteht ebenfalls aus einem ersten und einem zweiten Abschnitt, wobei der zweite äußere Abschnitt die Rechzinken trägt. Auch dieser Zinkenarm umfasst eine Schiebesitzverbindung, die von einer Verriegelungsanordnung, ausgeführt als Blattfeder, vollständig übergriffen wird, wobei die Blattfeder an ihrem freien Ende eine Bohrung aufweist, in die im verriegelten Zustand ein Bolzen einrastet. Diese Ausführung vermeidet es, die eigentliche Schiebesitzverbindung mit einer Querbohrung zu versehen, um den oben angesprochenen Nachteil einer Querbohrung im Schiebsitzbereich zu vermeiden. Die Verriegelungsanordnung ist dabei so ausgestaltet, dass diese an einem der beiden Abschnitte eines Zinkenarms außerhalb des Überdeckungsbereichs der Schiebesitzverbindung gehaltert ist und dabei den gesamten Überdeckungsbereich der Schiebesitzverbindung übergreift und am jeweils anderen Abschnitt in einer Verriegelungsanordnung festlegbar ist.

Die Weiterentwicklung von Kreiselschwadern insbesondere vor dem Hintergrund größer werdender Arbeitsbreiten und größerer Schwadkreiseldurchmesser, deren Belastung und Einsatzdauer im professionellen Anwendungsbereich stetig zunimmt führt dazu, dass die Anforderungen an die Dauerfestigkeit und damit insbesondere an die Gestaltfestigkeit derartiger Kupplungsverbindungen für abnehmbare Zinkenträger zunehmen. Insbesondere dann, wenn ein Teil der Zinkenarme für den Transport abgenommen werden soll, ist es zudem erforderlich, dass sich die Zinkenarme schnell und zuverlässig aus der Kupplungsverbindung herausnehmen bzw. kuppeln und verriegeln lassen.

Die Aufgabe der Erfindung ist es daher, eine Verriegelungseinrichtung zur Kupplung von zweiteiligen Zinkenarmen von Kreiselschwadern vorzuschlagen, die eine hohe Gestaltfestigkeit mit geringer Verschleißanfälligkeit aufweist, und die dabei ohne zur Hilfenahme von Werkzeugen schnell und einfach lös- und verriegelbar ist.

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung sieht dabei vor, die eigentliche Verriegelungseinrichtung aus dem Überdeckungsbereich des Kupplungsbereichs der beiden Zinkenarmabschnitte funktional auszulagern, so dass die Verriegelungselemente von Scherkräften, deren Ursache in Torsionskräften liegen und die auf einen Zinkenarm während seines Umlaufs um die Kreiselachse des Schwadkreisels einwirken, freigehalten werden. Derartige Torsionskräfte werden im Wesentlichen verursacht durch die Verschiebekraft, die erforderlich ist, um das am Boden liegende Futter mit den Rechzinken zusammenzurechen und die ein Torsionsmoment auf den Zinkenarm ausüben. Zudem wird in Folge der Winkelbeschleunigung und des Massenträgheitsmomentes bezogen auf die Achse der Zinkenarmlagerung während der Umsteuervorgänge der Rechzinkenstellung ein weiteres Torsionsmoment auf den Zinkenarm ausgeübt. Diese Torsionsmomente werden als Reaktionsmoment über den Steuerhebel des Zinkenarms über die Laufrolle des Steuerhebels auf der Kurvenbahn der Schwaderglocke abgestützt.

Dabei ist eine erfindungsgemäße Kupplungsverbindung zwischen dem lösbaren äußeren und inneren Teil eines erfindungsgemäßen Zinkenarms einschließlich deren Verriegelungseinrichtung so ausgelegt, dass nur die Kupplungseinrichtung auch bei unvermeidlichem Spiel, welches sich verschleißbedingt vergrößern kann, die Torsionskräfte aufnimmt, so dass die Verriegelungselemente selbst von diesen Kräften frei gehalten werden.

Erfindungsgemäß wird die Lösung des Problems darin gesehen, dass die Verriegelungseinrichtung so ausgestaltet ist, dass sie lediglich Kräfte aufnehmen kann, die eine axiale Verrückung innerhalb der Kupplungseinrichtung, d.h. zwischen dem inneren Teil und dem äußeren Teil eines Zinkenarms unterbindet. Torsionskräfte hingegen, die auf den Zinkenarm einwirken, werden konsequent von den Verriegelungselementen ferngehalten.

Dazu sieht die Erfindung vor, dass an der axialen Übergangsfuge der Kupplungseinrichtung ein Axialkräfte aufnehmendes Widerlager angeordnet ist, welches eine Anschlagfläche zur Begrenzung der Einstecktiefe von Kupplungshülse und Kupplungsschaft bildet, dem ein Anschlagbund mit zwei Anschlagschultern, einer vorderen und einer hinteren Anschlagschulter, gegenüberliegt.

Dabei ist die vordere Anschlagschulter der Anschlagfläche des Widerlagers zugewandt, und dem Widerlager und dem Anschlagbund ein lösbares Sicherungselement als Teil der Verriegelungseinrichtung zugeordnet. Das Sicherungselement übergreift dabei den Zinkenarm quer zu dessen Längserstreckung.

Dabei ist der Zinkenarm als Ganzes in bekannter Weise zweiteilig ausgebildet, wobei der radial innenliegende Teil im Lagergehäuse der dem Fachmann bekannten Schwaderglocke gelagert ist, die als rotierendes Gehäuse das Winkelgetriebe zum Antrieb des Schwadkreisels und auch die Kurvenbahn und die Steuerhebel zur Steuerung der Zinkenarme aufnimmt.

Die Drehmoment und Biegkräfte übertragende Kupplungsverbindung besteht aus einer an sich bekannten Kupplungshülse und einen Kupplungsschaft, die in der Betriebsstellung ineinander greifen, d.h. ineinander eingesteckt sind.

Dabei bildet der eigentliche Zinkenträger den außenliegenden Teil des Zinkenarms, der die Rechzinken aufnimmt. Diese Steckverbindung, bestehend aus Kupplungshülse und Kupplungsschaft ist dabei so ausgebildet und bemessen, dass sie gleichermaßen als Führungshülse in radialer Richtung bezogen auf die Kreiselachse des Schwadkreisels eine biegesteife Verbindung beider Teile untereinander und durch eine entsprechende Profilpaarung von Kupplunngshülse und Kupplungsschaft eine drehfeste Verbindung beider Teile, dem innenliegenden und dem außenliegenden Teil des Zinkenarms, umfasst.

Sollen diese beiden Funktionalitäten unter Einwirkung dynamisch wechselnder Belastungen dauerhaft ohne Verschleißerscheinungen gewährleistet sein, so verlangt dieses nach einer entsprechenden Qualität hinsichtlich der Werkstoffe und der Güte der Passungen im engen quasi spielfreien Toleranzbereich.

Daher ist es von besonderer Bedeutung, weitere Funktionalitäten, die auf die Dauerfestigkeit dieser Verbindung verschleißfördernd Einfluss nehmen können, von diesen Bauteilen möglichst fernzuhalten.

Dazu zählt unter anderem auch das Fernhalten von negativen Einflussgrößen, wie die Minderung der Gestaltfestigkeit durch Querbohrungen oder Duktilitätsstörungen durch Grobkornbildung in der Wärmeeinflußzone von Schweißnähten, die auch zur Rissbildung bei hohen Spannungsspitzen in der Schweißnaht führen können.

Dieses gilt um so mehr in dem hochbelasteten und daher für die Dauerfestigkeit kritischen Überdeckungsbereich der Steckkupplung.

Die Einführtiefe des Kupplungsschaftes in die Kupplungshülse ist durch einen Anschlagbund begrenzt, wobei dieser Anschlagbund gleichzeitig auch der Anschlag für die Verriegelungseinrichtung darstellt.

Die Funktionalität dieses Anschlagbundes beinhaltet somit eine Doppelfunktion, nämlich die der Lagefixierung der beiden Bauteile Kupplungshülse und Zinkenträger in Bezug auf die Einstecktiefe einerseits, und die der Lagefunktion gegenüber einer Verrückung in entgegengesetzter Richtung andererseits.

Letzteres bedeutet, dass der vorderen Anschlagschulter eine zweite, nämlich eine hintere Anschlagschulter zugeordnet ist, wobei beiden Anschlagschultern lediglich eine fixierende Lagefunktion in der axialen Längserstreckung des Zinkenarms zukommt.

Die hintere Anschlagschulter liegt dabei ebenfalls formschlüssig an einem Verriegelungselement der Verriegelungseinrichtung an, welches nunmehr ein unbeabsichtigtes herausgleiten des äußeren Teils des Zinkenarms, dem Zinkenträger, aus der Kupplungshülse verhindert. Gleichzeitig stellt diese Verriegelungseinrichtung auch das Widerlager zur Aufnahme der Zentripetalkraft als Reaktionskraft auf die Zentrifugalkraft dar.

Das eigentliche Verriegelungselement nimmt dabei eine tangentiale Lage gegenüber der Längsachse des Zinkenträgers ein und durchdringt diesen, wie im Fall eines Absteckbolzens nicht. Das Sicherungselement kann im einfachsten Fall ein Steckbolzen, beispielsweise auch ein Federstecker sein. Diese Ausgestaltung ist die Basis für eine hohe und dauerhafte Gestaltsfestigkeit bei weitestgehender Vermeidung von Kerben und Steifigkeitssprüngen, die gerade bei hohen dynamischen Belastungen Spannungskonzentration verursachen.

In einer weiteren Ausgestaltung kann das Sicherungselement zusätzlich eine axiale Vorspannkraft auf den Anschlagbund ausüben, welches einen zusätzlichen Beitrag zur Erhöhung der dauerhaften Gestaltfestigkeit der Kupplungsverbindung liefert.

Erfindungsgemäß kann ein derartiges Sicherungselement als Klappbügel ausgebildet sein. In vorteilhafter Weise ergibt sich dabei zusätzlich auch eine Verbesserung der Handhabbarkeit und damit des Bedienungskomforts des Kuppelvorganges und dieses auch im Sinne der Verbesserung der Eigensicherheit der Kupplungsverbindung.

Vorzugsweise wird dieses Verriegelungselement durch einen Klappbügel aus Federstahldraht gebildet. Der Klappbügel ist dabei in einer Scharnierlagerung des Widerlagers befestigt und kann dabei als Klappbügel zum Verriegeln und Verspannen über den Anschlagbund hinweg geklappt werden.

Die Lage der Achse der Scharnierlagerung des Klappbügels ist dabei gegenüber der Kupplungsmuffe und dessen Längsachse so gewählt, dass der Klappbügel beim Einklappen eine Druckkraft auf die außenliegende Ringfläche der Anschlagschulter des Anschlagbunds ausüben kann, welches eine Vorschubbewegung auf den eingesteckten Zinkenträger bewirken kann, sofern dieser nicht bereits an der Kontaktfläche des Widerlagers, welche den Anschlag für das Erreichen der vollen Einstecklänge des Zinkenträgers bildet, anliegt.

Somit wird mit geringem manuellen Kraftaufwand durch die ohnehin erforderliche Betätigung des Klappbügels für den Verriegelungsvorgang, der Kontakt zwischen den Anschlägen, dem des Anschlagbunds und dem des Widerlagers hergestellt.

Die Ausgestaltung des Klappbügels ist dabei so, dass er das Zinkenarmrohr in seiner Verriegelungsposition an seinem Umfang teilweise umgreift, wobei sich der Griff des Klappbügels zur Verbringung in diese Verriegelungsposition öffnen, d.h. elastisch verformen muss, um eben das Zinkenarmrohr übergreifen zu können. Nach dem Übergreifen des Zinkenarmrohrs stellt sich eine Rückverformung des Griffs des Klappbügels ein, wodurch sich durch diese Umklammerung des Rohrquerschnitts des Zinkenarmrohrs gleichzeitig eine Sicherungswirkung gegen unbeabsichtigtes Lösen der Verriegelung durch unbeabsichtigte Betätigung des Klappbügels einstellt.

Ein weiterer Vorteil dieser Art der Verriegelung gegen unbeabsichtigtes Lösen des Klappbügels besteht darin, dass es keine Zwischenstufe der Endverriegelung des Klappbügels gibt, d.h. entweder ist die Verriegelung mit dem Zinkenarmrohr durch dessen Umklammerung richtig verrastet, oder der Klappbügel steht deutlich sichtbar in einer nicht abgesicherten Position, d.h. die Umklammerung hat überhaupt nicht stattgefunden. Die nicht verriegelte Lage des Klappbügels ist dadurch deutlich erkennbar, indem der Klappbügel dann nämlich oberhalb des Zinkenarmes aufliegt.

Auch darin liegt ebenfalls ein erfinderischer Vorteil, der darin besteht, dass hierdurch im Falle einer nicht ordnungsgemäßen Verriegelung ein eindeutig wahrnehmbares Unterscheidungsmerkmal gegenüber der Verrieglungsstellung existiert. Dieses stellt somit auch einen Beitrag zur Erhöhung der Eigensicherheit der Verriegelungseinrichtung dar.

Nähere Einzelheiten der Erfindung sind den nachfolgenden Figurendarstellungen und deren Beschreibungen zu entnehmen.

Es zeigen:
- Fig. 1: zeigt einen Zinkenarm in der Situation vor dem Zusammenstecken mit offener Verriegelungseinrichtung
- Fig. 1a: Vergrößerung der Einzelheit X in Fig. 1
- Fig. 2: zeigt den Zinkenarm gemäß Fig.1 in der Situation nach dem Zusammenstecken mit geschlossener Verriegelungseinrichtung
- Fig. 2a: Vergrößerung der Einzelheit X in Fig. 2
- Fig. 3: zeigt einen Zinkenarm in der Situation vor dem Zusammenstecken mit offener Verriegelungseinrichtung nach dem Klappbügelprinzip
- Fig. 3a: Vergrößerung der Einzelheit X in Fig. 3
- Fig. 4: zeigt den Zinkenarm gemäß Fig.3 in der Situation nach dem Zusammenstecken mit geschlossener Verriegelungseinrichtung
- Fig.4a: Vergrößerung der Einzelheit X in Fig. 4
- Fig.5: zeigt einen Zinkenarm in der Situation vor dem Zusammenstecken mit offener Verriegelungseinrichtung nach einem anderen Klappbügelprinzip
- Fig.5a: Vergrößerung der Einzelheit X in Fig. 5
- Fig.6: zeigt den Zinkenarm gemäß Fig.5 in der Situation nach dem Zusammenstecken mit geschlossener Verriegelungseinrichtung
- Fig.6a: Vergrößerung der Einzelheit X in Fig. 6
- Fig.7: ein Ausführungsbeispiel analog Fig.3 nach dem Umkehrprinzip
- Fig.7a: Vergrößerung der Einzelheit X in Fig. 7
- Fig.8: ein Ausführungsbeispiel analog Fig.4 nach dem Umkehrprinzip
- Fig.8a: Vergrößerung der Einzelheit X in Fig. 8

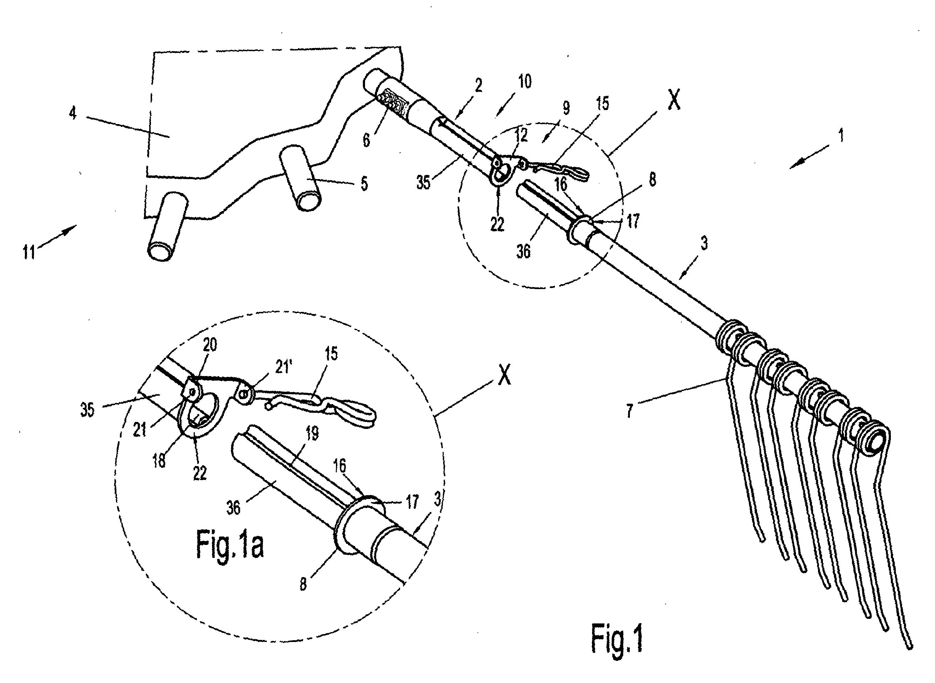

Fig. 1 zeigt einen Ausschnitt aus einem Schwadkreisel 11 mit einem noch nicht montierten Zinkenarm 1 in der Situation vor dem Zusammenstecken des äußeren Teils des Zinkenarms 3 ausgebildet als Zinkenträger mit der noch offenen Verriegelungseinrichtung 9 und noch nicht eingelegtem Sicherungselement 15.

Der Zinkenarm 1 als Ganzes ist in bekannter Weise in der Schwaderglocke 4 geführt und gelagert. Der Schwadkreisel 11 besteht aus der Schwaderglocke 4 mit dem darin enthaltenen Winkelgetriebe und der Kurvenbahnsteuerung, welche während des Umlaufs der Rechzinken 7 um die Kreiselachse des Schwadkreisels 11 die Zinkenarme 1 hinsichtlich ihrer Rechfunktion steuert. Der besseren Übersicht halber wurde nur ein Zinkenarm 1 des Schwadkreisels 11 dargestellt, wobei ein Schwadkreisel 11 beispielsweise dreizehn derartige Zinkenarme 1 umfassen kann.

Der Zinkenarm 1 besteht im Wesentlichen aus einem inneren Teil 2 und dem äußeren Teil 3 des Zinkenarms 1, den Rechzinken 7 und der Verriegelungseinrichtung 9. Dabei ist der innere Teil 2 mit den aus der Schwaderglocke 4 herausragenden von der Kurvenbahn gesteuerten Abtriebswellen 5 drehfest, beispielsweise mittels einer Schraubverbindung 6 verbunden.

Die Verriegelungseinrichtung 9 besteht im Wesentlichen aus der Kupplungseinrichtung 10 bestehend aus der Kupplungshülse 35 und dem Kupplungsschaft 36, dem Widerlager 12, dem Anschlagbund 8 und dem Sicherungselement 15.

Die Kupplungshülse 35 ist als Schiebesitzkupplung mit eingepressten Tangentialsicken 18 ausgebildet, die dazu dienen, ein Drehmoment zu übertragen.

In dem dargestellten Ausführungsbeispiel ist der äußere Teil 3 - der eigentliche Rechzinken 7 tragende Zinkenträger - als Rohr ausgebildet, wobei der Teil des Zinkenträgers 3, der als Kupplungsschaft 36 ausgebildet ist, in den Kupplungsbereich der Kupplungshülse 35 eingeführt wird, ebenfalls mit eingepressten Tangentialsicken 19 ausgestaltet ist. Der Teil des Rohres des Zinkenarms, der den Kupplungsschaft 36 bildet, mit den darin eingepressten Tangentialsicken 19, bildet somit das komplementäre Profil zur Kupplungshülse 35.

Endseitig ist der Zinkenträger 3 mit vier Rechzinken 7 bestückt. Der Zinkenträger ist dem Ausführungsbeispiel mit einem Anschlagbund 8 fest verbunden, der beispielsweise aufgepresst oder aufgeschrumpft sein kann. Der Anschlagbund umfasst zwei Anschlagschultern, die vordere Anschlagschulter 16 und die hintere Anschlagschulter 17.

Die Kupplungshülse 35 ist an ihrem äußeren stirnseitigen Ende mit einem Widerlager 12 fest verbunden, beispielsweise mit diesem verschraubt oder verschweist. Das Widerlager 12 ist dabei so ausgestaltet, dass es wenigstens zwei sich gegenüberliegende Laschen 20 mit Durchgangsbohrungen 21,21' aufweist. Die Durchgangsbohrungen 21,21' dienen zur Aufnahme des eigentlichen Sicherungselementes 15, beispielsweise einer Stiftverbindung oder zur Lagerung eines Klappbügels, welcher den beweglichen Teil der Verriegelungseinrichtung 9 darstellt.

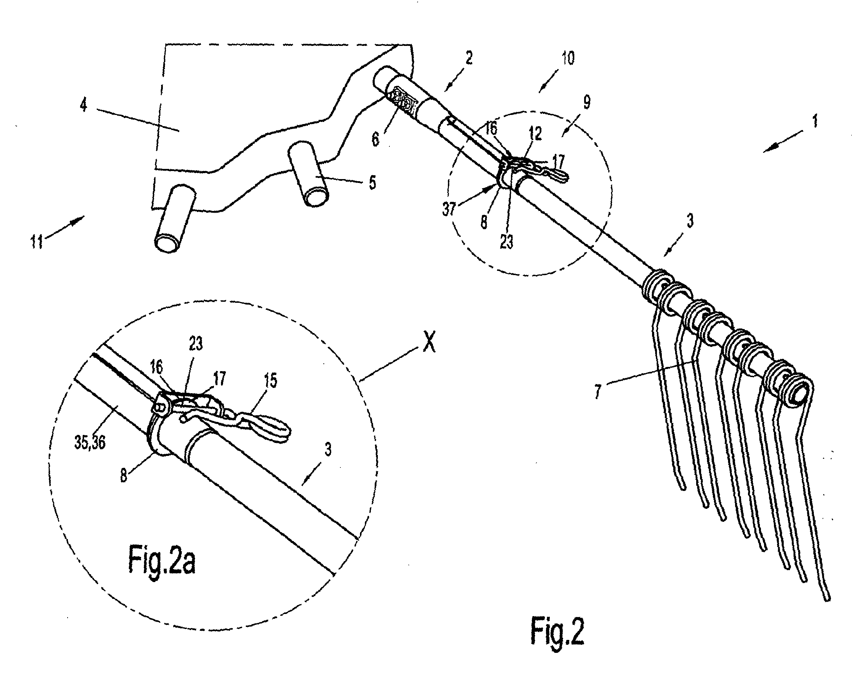

Fig. 2 zeigt einen Ausschnitt aus einem Schwadkreisel 11 gemäß Fig.1 mit einem montierten Zinkenarm 1 in der Situation nach dem Zusammenstecken des Kupplungsschaftes 36 des Zinkenträgers 3 in die Kupplungshülse 35 der Kupplungseinrichtung 10 mit geschlossener Verriegelungseinrichtung 9, d.h. mit eingelegtem Sicherungselement 15.

In dieser montierten Stellung liegt der Anschlagbund 8 mit seiner vorderen Anschlagschulter 16 an der Anschlagfläche 22 des Widerlagers 12 an, wobei diese Kontaktflächen, Anschlagfläche 22 und vordere Anschlagschulter 16 die axiale Übergangsfuge 37 zwischen dem gekuppelten inneren Teil 2 und dem äußeren Teil 3 des Zinkenarms bilden. Das Sicherungselement 15, beispielsweise ausgebildet als Federstecker, ist von den Durchgangsbohrungen 21,21' aufgenommen und gehaltert. Gleichzeitig liegt der gerade Schaft des Federsteckers als Sicherungsstift 23 an der hinteren Anschlagschulter 17 an, so dass der Zinkenträger in seiner Lage fixiert und verriegelt ist.

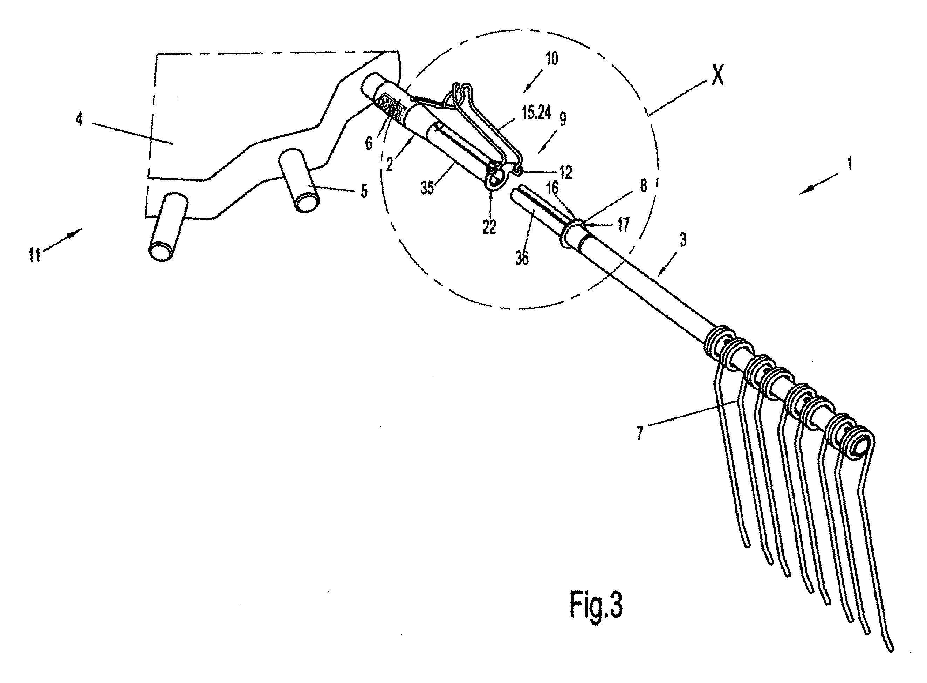

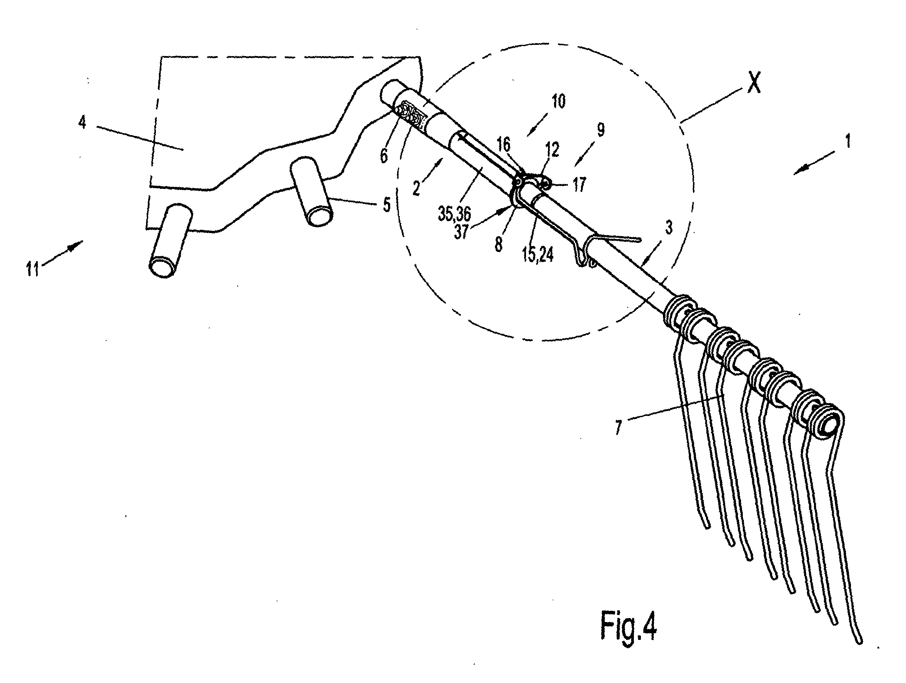

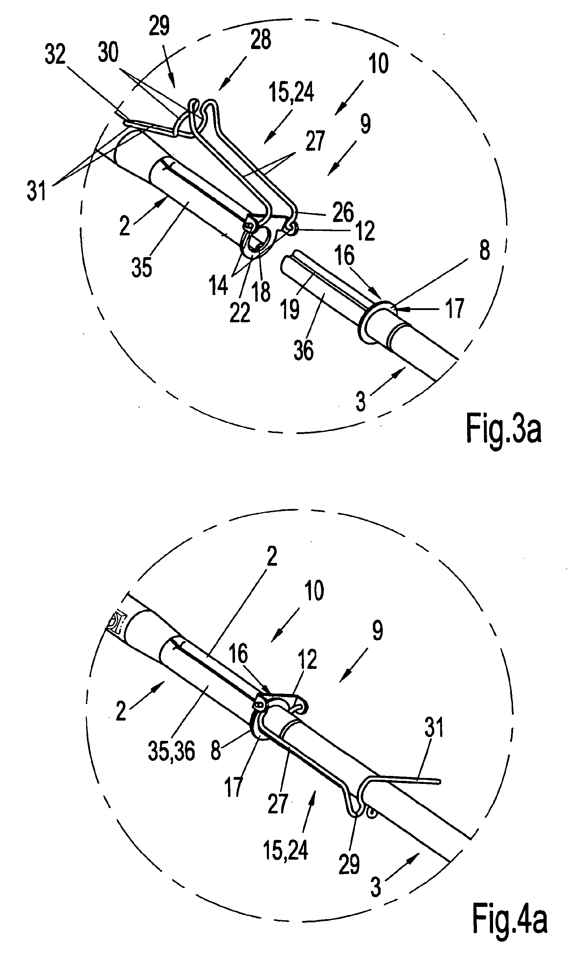

Die Figuren Fig. 3 und Fig.4 zeigen ein weiteres alternatives Ausführungsbeispiel einer Verriegelungseinrichtung 9 in Form eines Klappbügelverschlusses, und zwar zeigt Fig.3 die geöffnete und Fig.4 die verriegelte Stellung. Die Figuren Fig. 3a und Fig.4a zeigen vergrößerte Ausschnitte der Einzelheiten "X" der Figuren Fig.3 bzw. Fig.4.

Fig. 3 zeigt einen Ausschnitt aus einem Schwadkreisel 11 mit einem noch nicht montierten Zinkenarm 1 in der Situation vor dem Zusammenstecken des äußeren Teils des Zinkenarms 3, (Zinkenträger) mit der noch offenen Verriegelungseinrichtung 9 und noch nicht eingelegtem Sicherungselement 15, wobei das Sicherungselement 15 als klappbares Element bzw. als Klapp- und Überwurfbügel 24 ausgebildet ist. Der Klapp- und Überwurfbügel 24 ist in seiner geöffneten, d.h. zurück geklappten Stellung dargestellt. Gelagert ist der beispielsweise aus Federstahldraht bestehende Klapp- und Überwurfbügel 24 in den Durchgangsbohrungen 21,21' des Widerlagers 12.

Fig. 4 zeigt einen Ausschnitt aus einem Schwadkreisel 11 gemäß Fig.3 mit einem montierten Zinkenarm 1 in der Situation nach dem Zusammenstecken des Zinkenträgers 3 in die Kupplungseinrichtung 10 mit geschlossener Verriegelungseinrichtung 9, d.h. mit eingelegtem Sicherungselement 15.

Der Klapp- und Überwurfbügel 24 ist dabei in seiner geschlossenen. d.h. eingeklappten Stellung dargestellt, wobei der Klappbügel 24 einen Teil des Rohrumfangs des äußeren Zinkenarms 3 umklammert, welches seine Verriegelungsposition definiert.

Der Klappbügel 24 ist vorzugsweise aus vergütetem Federstahldraht hergestellt. Er besteht im Wesentlichen aus den angeformten Scharnierzapfen, den sich anschließenden Rundschenkeln 26, den Längsschenkeln 27 die im hinteren Teil 28 nach abgekröpft sind und denen sich der Umfassungsbereich 29 mit den gerundeten Umfassungsschenkeln 30 anschließt, und wobei sich den gerundeten Umfassungsschenkeln 30 ein aufsteigender gerader Schenkel 31 anschließt, die letztlich durch ein Brückenglied 32 untereinander verbunden sind. Die beiden geraden Schenkel 31 in Verbindung mit dem Brückenglied, welches diese verbindet, stellen praktisch einen Handgriff zur Betätigung des Klappbügels 27 dar.

Der dargestellte Klappbügel 24 ist somit ein monolithisches, beispielsweise aus Federstahldraht, durch reine Biegevorgänge herstellbares kostengünstiges Teil, welches somit einen besonderen wirtschaftlichen Vorteil beinhaltet.

Die Scharnierzapfen des Klappbügels 24 lassen sich durch einfaches Zusammendrücken der Längsschenkel 27 in die Durchgangsbohrungen 21,21' von dem Widerlager 12, welches fest mit der Kupplungshülse 2 in Verbindung steht, einführen. Damit ist der Klappbügel 24 in den Durchgangsbohrungen 21,21' als Lagerbohrungen scharniert und kann um die Figurenachse der Durchgangsbohrungen 21,21' verschwenkt werden.

Die Lagerung und Ausgestaltung des Klappbügels 24 machen es möglich, dass, sobald der äußere Teil 2 des Zinkenarms 1 gemäß Fig. 4 in die Kupplungshülse 35 hinreichend weit eingesteckt ist, der Klappbügel 24 aus seiner zurückgeklappten in die Verriegelungsposition verklappt werden kann. Dabei kommen die Rundbügel 26 des Klappbügels 24 an der hinteren Anschlagschulter 17 des Anschlagbunds 8 zur Anlage. Liegt dabei die vordere Anschlagschulter 16 noch nicht an der Anschlagfläche 22 an, so kann unter Einwirkung der Hebelkraft, die von dem handbetätigten Klappbügel ausgeht, durch die so erzeugte Vorschubkraft die Vorschubbewegung bis zum endgültigen Anschlagkontakt unterstützt werden.

Dabei ist durch die Geometrie die Verformbarkeit des Klappbügels 24 so bemessen, dass durch weiteres Betätigen des Klappvorgangs in Richtung der Verriegelungsposition eine Druckkraft in Längsrichtung des Zinkenarms 3 auf die Kontaktfläche zwischen der Kupplungshülse 35 und der Anschlagschulter 16 des äußeren Zinkenarms 3 aufgebracht wird. Dieses verursacht somit eine axiale Vorspannkraft, welche als Druckkraft auf die ineinander gesteckten Teile des Zinkenarms 1, nämlich auf die Kontaktfläche zwischen der Anschlagfläche 22 des Widerlagers 12 und der vorderen Anschlagschulter 16 des Anschlagbunds 8 einwirkt.

Dabei verklammert sich der Klappbügel 24 in der Verriegelungsposition mit seinen Umfassungsschenkeln 30 um den Rohrschaft des Zinkenträgers 3, indem er in der Verriegelungsposition den Rohrquerschnitt des Zinkenträgers 3 umgreift, so dass der Klappbügel sich durch die Umklammerung in einer eigensicheren und damit gesicherten Position befindet. Zudem stellt diese Art einer Verriegelungseinrichtung 9 dabei ein axiales Spannglied dar.

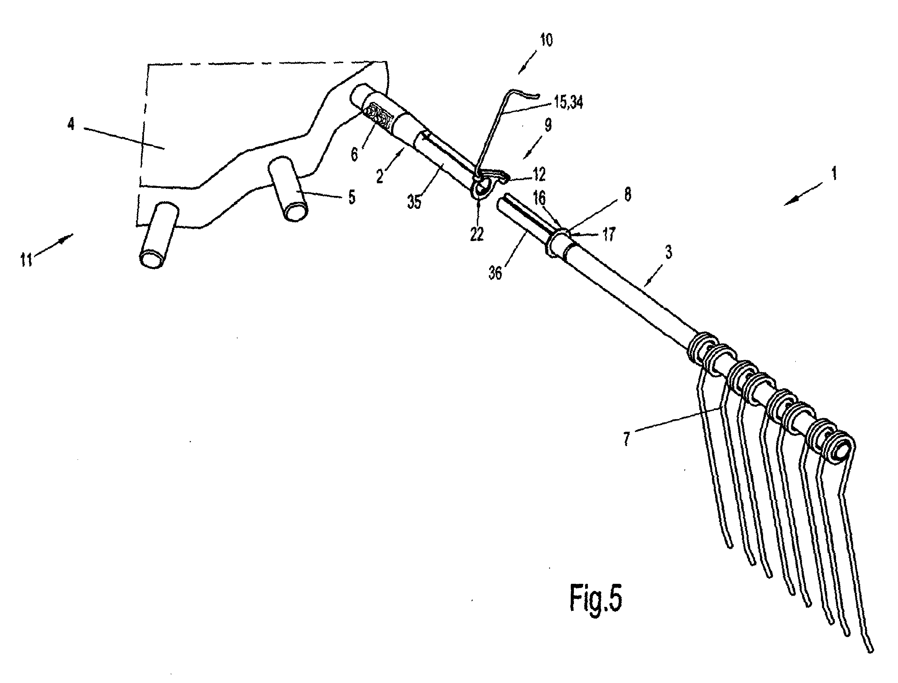

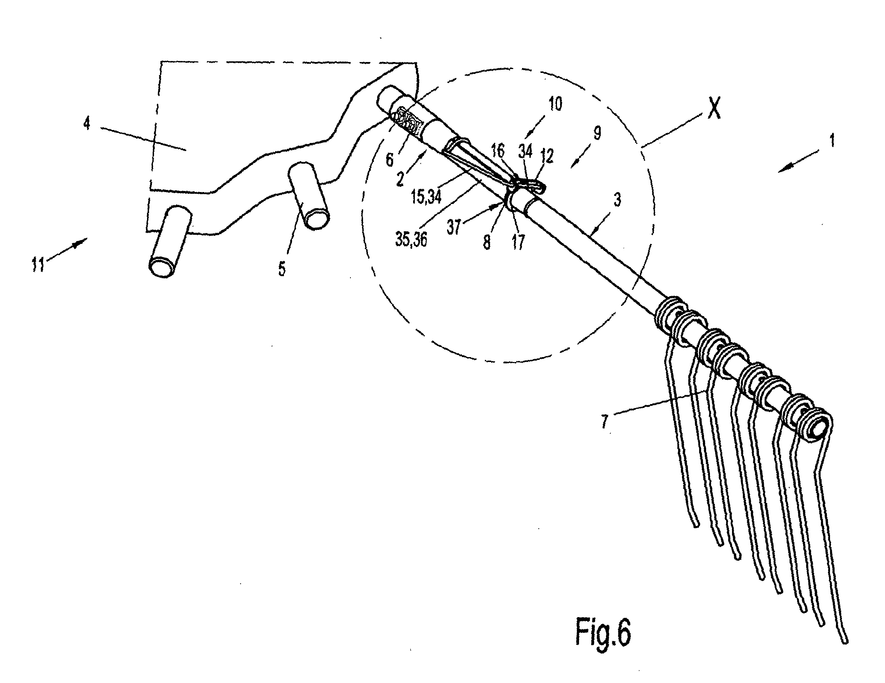

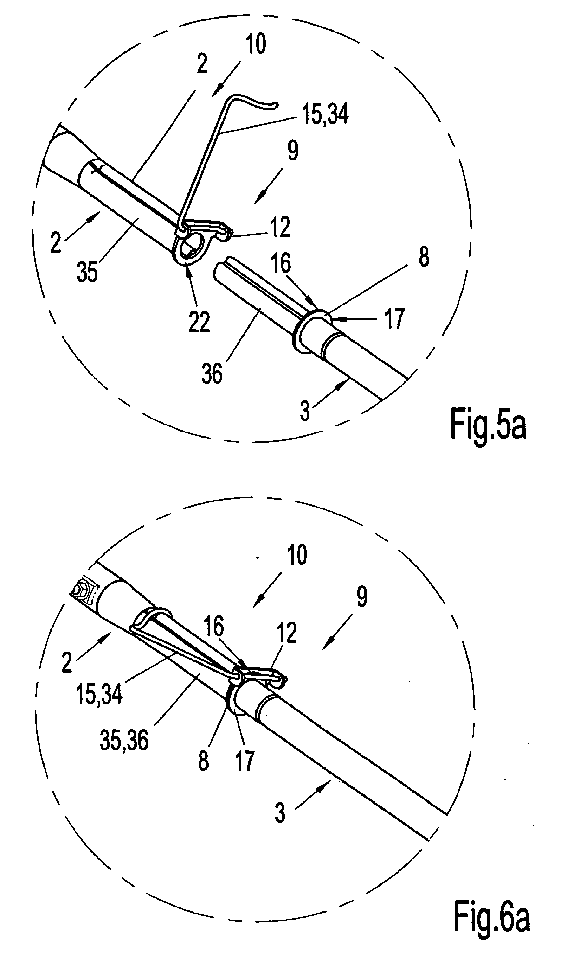

Die Figuren Fig. 5 und Fig.6 zeigen ein weiteres alternatives Ausführungsbeispiel einer Verriegelungseinrichtung 9 eines Klappbügelverschlusses, und zwar zeigt Fig.5 die geöffnete und Fig.6 die verriegelte Stellung. Die Figuren Fig. 5a und Fig.6a zeigen vergrößerte Ausschnitte der Einzelheiten "X" der Figuren Fig.5 bzw. Fig.6.

In diesem Ausführungsbeispiel ist der Klappbügel 34 als Sicherungselement 15 ebenfalls in den Durchgangsbohrungen 21,21' gelagert, wobei der Teil des Klappbügels 34, der sich zwischen den Laschen 20, erstreckt, zweifach verköpft ist und somit als Klappbügel 34 mit Exzenterfunktion ausgebildet ist.

Diese Exzenterfunktion ermöglicht es, den Kupplungsschaft 36 des Zinkenträgers 3 mit der geöffneten Verriegelung ungehindert in die Kupplungshülse 35 einzuführen, wobei sich der exzentrische Teil des Klappbügels 34 nach dem rückwärtigen Verklappen in die Verriegelungsposition wie ein Sicherungsstift an der hinteren Anlageschulter 17 des Anschlagbunds 8 anlegt.

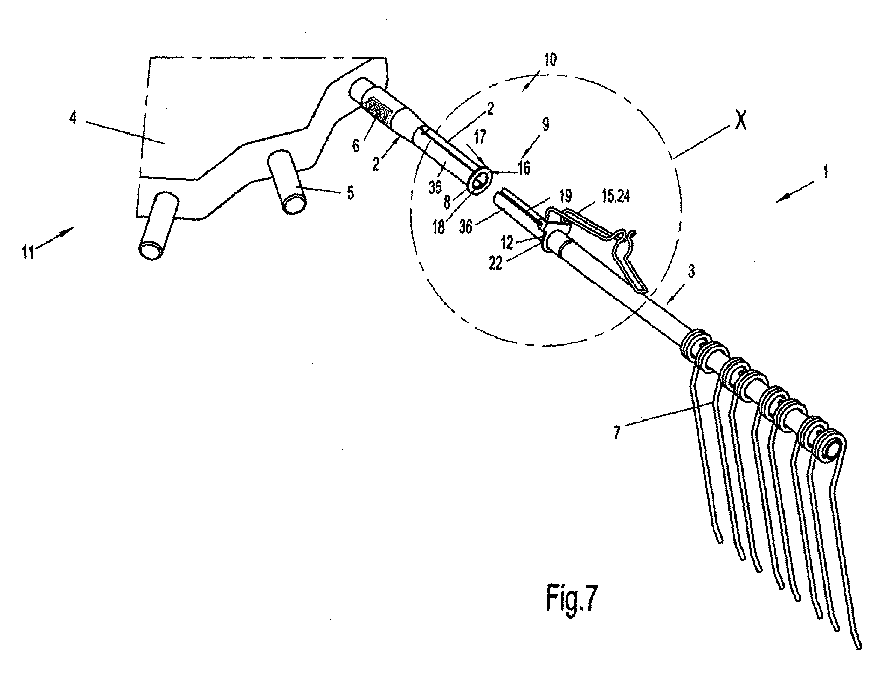

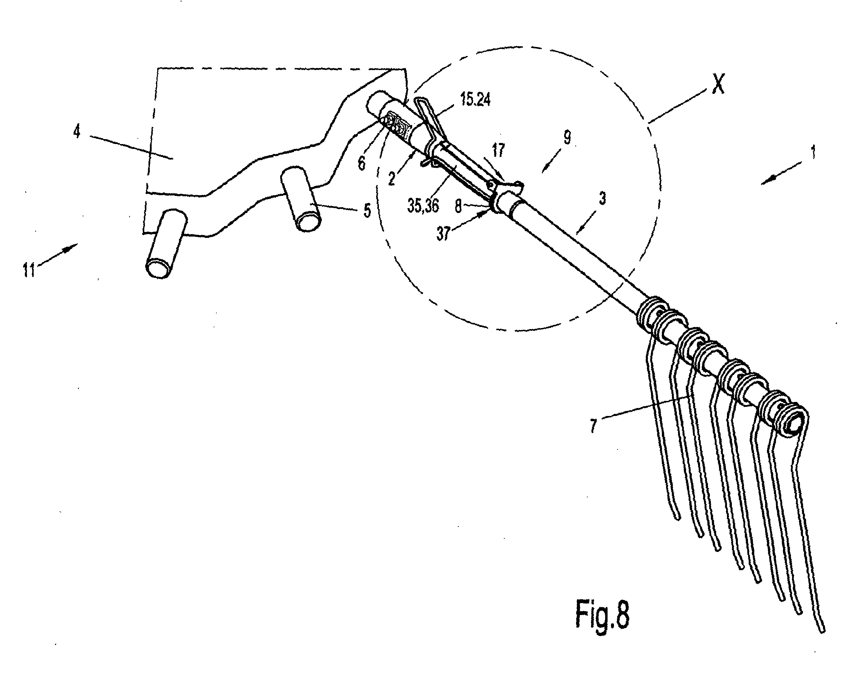

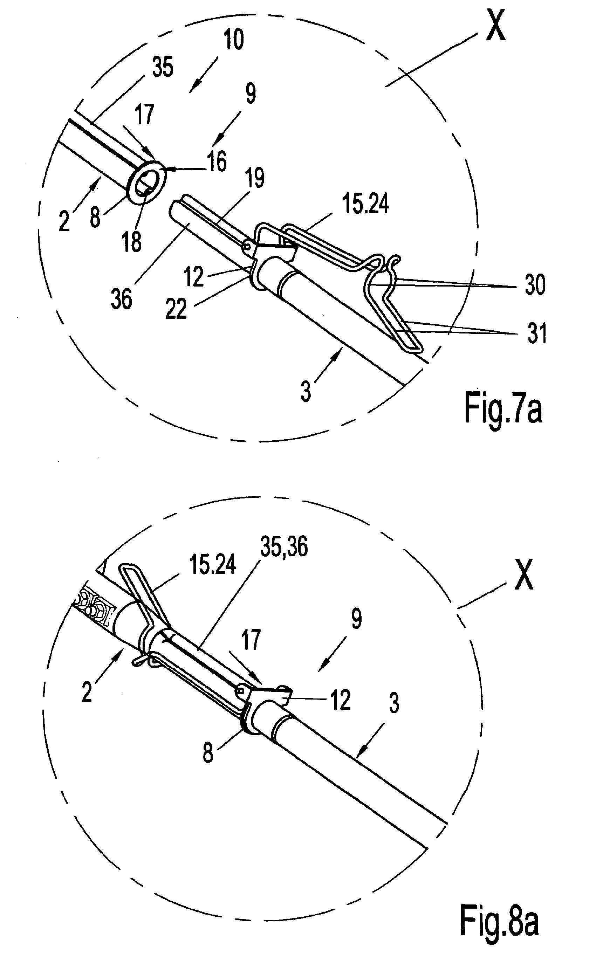

Es liegt im Können und Wissen eines Fachmanns, die Erfindung auch im Sinne des Umkehrprinzips anzuwenden. Die Figuren Fig.7 und Fig.8 zeigen ein Ausführungsbeispiel analog Fig.3 bzw. Fig. 4 nach einem denkbaren Umkehrprinzip, indem der Anschlagbund 8 nunmehr der Kupplungshülse 35 und das Widerlager 12 dem Zinkenträger 3 zugeordnet ist. Fig.7a bzw. Fig.8a zeigen die Einzelheiten X als Vergrößerungen der Figuren Fig. 7 bzw. Fig.8.

Weitere Umkehrprinzipien können auch dadurch realisiert werden, indem beispielsweise die Kupplungshülse 35 dem äußeren Teil des Zinkenarms 3 und der Kupplungsschaft 36 dem inneren Teil des Zinkenarms zugeordnet werden.

### Bezugszeichenliste

- 1: Zinkenarm
- 2: innerer Teil des Zinkenarms
- 3: äußerer Teil des Zinkenarms (Zinkenträger)
- 4: Schwaderglocke
- 5: Abtriebwelle
- 6: Schraubverbindung
- 7: Rechzinken
- 8: Anschlagbund
- 9: Verriegelungseinrichtung
- 10: Kupplungseinrichtung
- 11: Schwadkreisel
- 12: Widerlager
- 14: Absteckbohrungen
- 15: Sicherungselement
- 16: vordere Anschlagschulter
- 17: hintere Anschlagschulter
- 18: eingepresste Tangentialsicke
- 19: eingepresste Tangentialsicke
- 20: Lasche
- 21,21': Durchgangsbohrung
- 22: Anschlagfläche
- 23: Sicherheitsstift
- 24: Klappbügel
- 26: Rundbügel
- 27: Längsschenkel
- 28: Hinterer Teil
- 29: Unfassungsbereich
- 30: Umfassungsschenkel
- 31: gerader Schenkel (Handgriff)
- 32: Brückenglied
- 34: Klappbügel
- 35: Kupplungshülse
- 36: Kupplungsschaft
- 37: axiale Übergangsfuge

## Patentansprüche

1. Heuwerbungsmaschine, insbesondere Kreiselschwader, mit wenigstens einem um eine aufrechte Kreiselachse umlaufenden Schwadkreisel mit gesteuerten Rechzinken (7) aufweisenden Zinkenarmen (1), die in Traglagern eines umlaufenden Kreiselgehäuses gelagert sind und wobei wenigstens einer der Zinkenarme (1) zumindest aus zwei lösbar miteinander verbundenen Teilen, einem dem Kreiselgehäuse (4) zugewandten inneren Teil (2) und einem den Rechzinken (7) aufnehmenden äußeren Teil (3) besteht, die in einer Drehmoment übertragenden Schiebsitzverbindung, ausgebildet als Kupplungseinrichtung (10), ineinandersteck- oder demontierbar sind, und wobei die Kupplungseinrichtung (10) eine axiale Übergangsfuge vom inneren (2) zum äußeren Teil (3) aufweist, wobei beide Teile (2 und 3) durch eine Verriegelungseinrichtung (9) in der Betriebsstellung gegeneinander verriegelbar sind, **dadurch gekennzeichnet, dass** der axialen Übergangsfuge (37) der Kupplungseinrichtung (10) ein Axialkräfte aufnehmendes Widerlager (12) zugeordnet ist, und dass der Anschlagfläche (22) des Widerlagers (12) ein Anschlagbund (8) mit zwei Anschlagschultern, einer vorderen (16) und einer hinteren Anschlagschulter (17) gegenüberliegt, und die vordere Anschlagschulter (16) der Anschlagfläche (22) des Widerlagers (12) zugewandt ist, und wobei dem Widerlager (12) und dem Anschlagbund (8) ein lösbares Sicherungselement (15) als Teil der Verriegelungseinrichtung (9) zugeordnet ist, und das Sicherungselement (15) den Zinkenarm (1) quer zu dessen Längserstreckung übergreift.

2. Heuwerbungsmaschine nach Anspruch 1, **dadurch gekennzeichnet, dass** die Verriegelungseinrichtung (9) einen Anschlagbund (8) mit einer vorderen Anschlagschulter (16) und einer hinteren Anschlagschulter (17) umfasst, wobei im verriegelten Zustand der Verriegelungseinrichtung (9) die vordere Anschlagschulter (16) von der stirnseitigen Anschlagfläche (22) des inneren Teils (2) und die hintere Anschlagschulter (17) von dem Sicherungselement (15) festgelegt ist.

3. Heuwerbungsmaschine nach Anspruch 1, **dadurch gekennzeichnet, dass** das Sicherungselement (15) an dem Widerlager (12) festlegbar ist.

4. Heuwerbungsmaschine nach Anspruch 1, **dadurch gekennzeichnet, dass** das Sicherungselement (15) eine Stiftverbindung als Abstecksicherung umfasst.

5. Heuwerbungsmaschine nach Anspruch 1, **dadurch gekennzeichnet, dass** das Sicherungselement (15) einen Klappbügel (24,34) umfasst.

6. Heuwerbungsmaschine nach Anspruch 5, **dadurch gekennzeichnet, dass** die Scharnierachse des Klappbügel (24,34) quer zur Längserstreckung des Zinkenarms verläuft.

7. Heuwerbungsmaschine nach Anspruch 1 in Verbindung mit einem oder mehreren der vorhergehenden Ansprüche, **dadurch gekennzeichnet, dass** das Widerlager (12) zwei Laschen (20) aufweist, welche Durchgangsbohrungen (21,21') aufweisen.

8. Heuwerbungsmaschine nach Anspruch 7, **dadurch gekennzeichnet, dass** die Figurenachse der Durchgangsbohrungen (21,21') quer zur Längserstreckung des Zinkenarms (1) und oberhalb des Zinkenarms (1) verlaufen.

9. Heuwerbungsmaschine nach Anspruch 7, **dadurch gekennzeichnet, dass** die Durchgangsbohrungen (21,21') ein Sicherungselement (15) aufnehmen.

10. Heuwerbungsmaschine nach Anspruch 8, **dadurch gekennzeichnet, dass** die Durchgangsbohrungen (21,21') die Scharnierlagerung eines Klappbügels (24,34) sind.

## Claims

1. A hay making machine, in particular a rotary windrower, comprising at least one windrowing rotor which rotates about a perpendicular rotor axis and having controlled tine arms (1) which have rake tines (7) and which are supported in carrier mountings of a rotating rotor housing and wherein at least one of the tine arms (1) comprises at least two releasably interconnected parts, an inner part (2) which is towards the rotor housing (4) and an outer part (3) which carries the rake tines (7), and which can be fitted into or removed from a torque-transmitting push fit connection in the form of a coupling device (10) and wherein the coupling device (10) has an axial transitional join from the inner part (2) to the outer part (3), wherein both parts (2 and 3) are lockable relative to each other in the operative position by a locking device (9), **characterised in that** a support (12) for carrying axial forces is associated with the axial transitional join (37) of the coupling device (10) and that an abutment collar (8) with two abutment shoulders, a front abutment shoulder (16) and a rear abutment shoulder (17), is in opposite relationship to the abutment surface (22) of the support (12) and the front abutment shoulder (16) faces towards the abutment surface (22) of the support (12) and wherein a releasable securing element (15) as part of the locking device (9) is associated with the support (12) and the abutment collar (8) and the securing element (15) engages over the tine arm (1) transversely with respect to the longitudinal extent thereof.

2. A hay making machine according to claim 1 **characterised in that** the locking device (9) includes an abutment collar (8) having a front abutment shoulder (16) and a rear abutment shoulder (17), wherein in the locked condition of the locking device (9) the front abutment shoulder (16) is fixed by the end abutment surface (22) of the inner part (2) and the rear abutment shoulder (17) is fixed by the securing element (15).

3. A hay making machine according to claim 1 **characterised in that** the securing element (15) can be fixed to the support (12).

4. A hay making machine according to claim 1 **characterised in that** the securing element (15) includes a pin connection as a connection securing means.

5. A hay making machine according to claim 1 **characterised in that** the securing element (15) includes a pivotable loop (24, 34).

6. A hay making machine according to claim 5 **characterised in that** the hinge axis of the pivotable loop (24, 34) extends transversely with respect to the longitudinal extent of the tine arm.

7. A hay making machine according to claim 1 in conjunction with one or more of the preceding claims **characterised in that** the support (12) has two plates (20) which have through bores (21, 21').

8. A hay making machine according to claim 7 **characterised in that** the figure axis of the through bores (21, 21') extend transversely with respect to the longitudinal extent of the tine arm (1) and above the tine arm (1).

9. A hay making machine according to claim 7 **characterised in that** the through bores (21, 21') accommodate a securing element (15).

10. A hay making machine according to claim 8 **characterised in that** the through bores (21, 21') are the hinge mounting of a pivotable loop (24, 34).

## Revendications

1. Machine de fenaison, en particulier à râteau rotatif, comprenant au moins un râteau tournant autour d'un axe et présentant des bras (1) qui portent des pointes de râteau (7) et sont montés dans des paliers d'un boîtier rotatif (4) au moins un des bras (1) étant composé de deux parties reliées entre elles de manière amovible, à savoir une partie interne (2) près du boîtier rotatif (4) et une partie externe (3) portant les pointes de râteau (7), ces parties pouvant être emmanchées l'une dans l'autre par une liaison coulissante transmettrice de couple, réalisée sous la forme d'un dispositif d'accouplement (10) qui présente un joint axial de transition entre les parties (2) et (3) qui peuvent être verrouillées en position de service par un dispositif de verrouillage (9), **caractérisée en ce qu'**au joint de transition (37) axial du dispositif d'accouplement (10) est associé un palier d'opposition (12) qui accueille des forces axiales et présente une portée de butée (22) faisant face à un collet de butée (8) présentant deux épaulements de butée, un épaulement avant (16) en regard de la portée de butée (22) et un épaulement arrière (17) avec, associé à un palier d'opposition (12) et au collet de butée (8), un élément de sécurité (15) amovible qui fait partie du dispositif de verrouillage (9) et qui est en prise avec le bras à pointes (1) transversalement par rapport à la direction longitudinale de celui-ci.

2. Machine de fenaison selon la revendication 1, **caractérisée en ce que** le dispositif de verrouillage (9) comprend un collet de butée (8) présentant un épaulement de butée (16) avant et un épaulement de butée (17) arrière, et à l'état verrouillé du dispositif (9), l'épaulement de butée (16) avant est fixé par la portée de butée (22) frontale de la partie interne (2), tandis que l'épaulement de butée (17) arrière est fixé par l'élément de sécurité (15).

3. Machine de fenaison selon la revendication 1, **caractérisée en ce que** l'élément de sécurité (15) peut être fixé sur le palier d'opposition (12).

4. Machine de fenaison selon la revendication 1, **caractérisée en ce que** l'élément de sécurité (15) comprend une liaison à broche en tant que sécurité enfichable.

5. Machine de fenaison selon la revendication 1, **caractérisée en ce que** l'élément de sécurité (15) comprend un étrier basculant (24, 34).

6. Machine de fenaison selon la revendication 5, **caractérisée en ce que** l'axe de charnière de l'étrier basculant (24, 34) est perpendiculaire à la direction longitudinale du bras à pointes.

7. Machines de fenaison selon la revendication 1, en liaison avec une ou plusieurs des revendications précédentes, **caractérisée en ce que** le palier d'opposition (12) présente deux pattes (20) percées de trous de passage (21, 21').

8. Machine de fenaison selon la revendication 7, **caractérisée en ce que** l'axe géométrique des trous de passage (21, 21') est perpendiculaire à la direction longitudinale du bras à pointes (1) et passe au-dessus de ce bras.

9. Machine de fenaison selon la revendication 7, **caractérisée en ce que** les trous de passage (21, 21') accueillent un élément de sécurité (15).

10. Machine de fenaison selon la revendication 8, **caractérisée en ce que** les trous de passage (21, 21') constituent le palier de charnière de l'étrier basculant (23, 34).
